# EUROPEAN PATENT SPECIFICATION

(11) **EP 3 914 434 B1**
(45) Date of publication and mention of the grant of the patent: **22.05.2024**
(21) Application number: 20701454.9
(22) Date of filing: 21.01.2020
(51) Int. Cl.: B29C 51/10, B29C 51/08, B29C 51/30, B29C 51/36, B29C 51/20, B29C 51/34, B65D 1/26, B65D 85/34, B29K 67/00, B29L 31/00, B65D 1/44, B65D 81/02

(54) **A METHOD AND TOOL FOR MANUFACTURING A CONTAINER FROM A THERMOPLASTIC MATERIAL AND CONTAINER**
VERFAHREN UND WERKZEUG ZUR HERSTELLUNG EINES BEHÄLTERS AUS EINEM THERMOPLASTISCHEN MATERIAL SOWIE BEHÄLTER
PROCÉDÉ ET OUTIL DE FABRICATION D'UN RÉCIPIENT À PARTIR D'UN MATÉRIAU THERMOPLASTIQUE ET RÉCIPIENT

(30) Priority: 24.01.2019 GB 201900964
(43) Date of publication of application: 01.12.2021
(73) Proprietor: Softform Limited, Bridgwater, Somerset, TA6 5LT (GB)
(72) Inventor: HANDELL, Leigh, Bridgwater, Somerset TA6 5LT (GB); BAKER, Martin, Bridgwater, Somerset TA6 5LT (GB)
(74) Representative: JENSEN & SON
(86) International application number: PCT/EP2020/051373
(87) International publication number: WO 2020/152142

(56) References cited:
- EP-A1- 1 544 129
- EP-A2- 0 158 275
- FR-A1- 2 108 873
- FR-A1- 2 698 037
- US-A- 3 414 180
- US-A- 5 913 996

## Description

The present invention relates to a method for manufacturing a container from a thermoplastic material and a tool for moulding the container.

According to the present invention there is provided a tool for thermoforming a container according to claim1.

In a preferred embodiment, a plurality of grooves are provided in the plug to form a plurality of ribs upstanding in the interior of the base of the container. In one preferred form, said plurality of grooves are arranged in spaced parallel relationship. In another embodiment, the groove or grooves are arranged to provide a rib or an array of ribs shaped to support a particular type of product.

In an alternative embodiment, the lower face of the plug has a peripheral rib extending around the periphery of the base adjacent the side wall of the container, the rib mating with a corresponding peripheral groove in the base of the mould to clamp the material of the container firmly between the plug and the mould.

In a preferred embodiment, the profile of the lower face of the plug is formed on an insert secured to the plug. In which case, the insert is located in a recess in the lower face of the plug.

Preferably, the insert is removably secured to the plug to enable the tool to be readily adapted to produce, selectively, a variety of containers having different base profiles. The present invention also provides a method of manufacturing a container from a sheet of thermoplastic material according to claim 9.

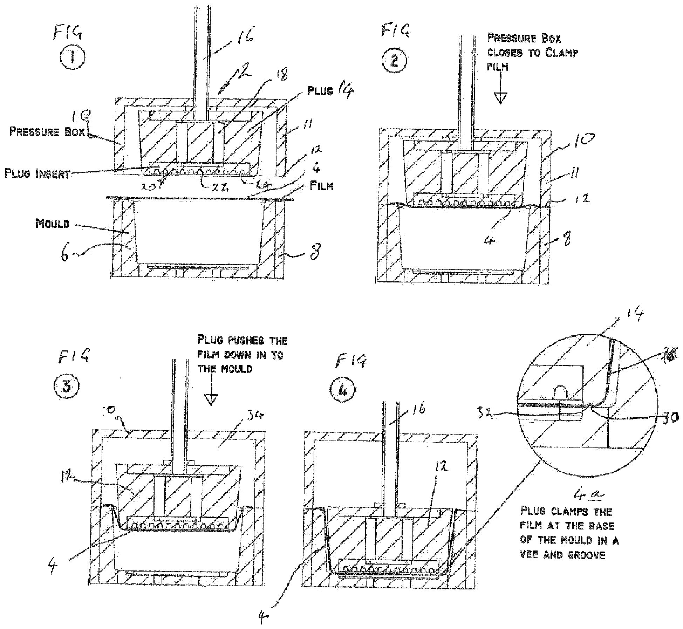

A preferred embodiment of the present invention will now be described with reference to the accompanying figures in which
Figures 1-7 illustrate a tool for manufacturing a container from a thermo-forming material in seven stages.

Referring now to Figure 1 in particular there is shown a tool for manufacturing a container from a thermo-formable plastics material such as polyethylene terephthalate (PET), the container having a peripheral wall 26 and a base 28 and typically being intended for storing and displaying products such as soft fruit for sale in supermarkets and the like. In a practical application, a bank of six or eight of such tools are arranged in a frame (not shown) to produce six or eight containers simultaneously from a large sheet or film of material 4. The container is thus formed as a one-piece moulding which is shaped and cut from a thermoformable sheet or film of material which in this embodiment comprises PET.

A mould 6 which serves to define the outer shape and dimensions of the container is located in the frame 8. A pressure box 10 is positioned above the mould 6 and has a downwardly extending wall 11 the lower edge 12 of which engages with the frame 8 to provide a substantially airtight seal with the sheet of material 4 trapped therebetween. A plug 14 is located in the pressure box 10, the plug 14 having an interior space 18 connected a to a source of vacuum through a vacuum pipe 16. At its lower face 20, the plug has a recess therein in which is located an insert 22 containing a plurality of grooves 24 which define the profile of the base 28 of the container 2. The inner, rear side of the insert 22 is connected to the space 18 so that the insert 22 and the grooves 24 are subjected to vacuum supplied through the vacuum pipe 16. As a result, the material of the base is drawn into the grooves to form a plurality of ribs 25 in the interior of the base of the container, the ribs being in spaced parallel relationship. The size, positioning and shape of the grooves is determined by the intended application and the type of product, such as strawberries, grapes, peaches et cetera for which the container is intended.

Referring now to Figure 4 and 4a in particular, the plug 14 has a peripheral groove 30 extending around the periphery of its lower face 20 which in the moulding position engages in a rib 32 located in the base of the mould just inwardly of the peripheral wall 26 of the container. The peripheral groove 30 and rib 32 serve as clamping surfaces to securely clamp the material of the container in position to define and secure the peripheral wall 26 of the container separate from the base. In this way, the seal formed between the wall of the container and the base of the container enables the wall and the base to be subjected to different pressures in the same pressing operation. This not only prevents material from the wall being drawn into the base when the base material is deformed thereby to maintain the rigid strength required for the wall but enables the material of the base to be stretched into the grooves to form a thinner material for the base in these areas thus increasing the flexibility and cushioning effect of the ribs formed in the base of the container.

In an alternative embodiment (not shown) the rib 32 is located on the lower face of the plug and the groove 30 is formed in the base of the mould. In an alternative embodiment (not shown) there is no insert and the plug is formed of a metal such as aluminium and the grooves are machined in the lower face of the plug. In an alternative embodiment in which a peripheral rib is formed on the plug, the material of the plug is machined away to leave the peripheral rib standing proud of the remainder of the lower face of the plug.

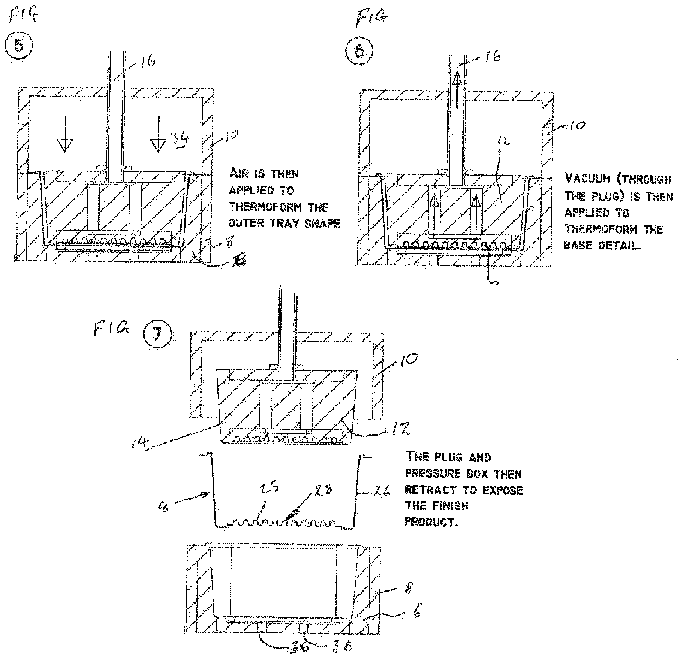

As shown in Figure 2, the pressure box 10 is closed to trap the sheet material 4 between the frame 8 and the lower edge 12 of the pressure box 10. Thereafter, as shown in Figure 5, air pressure is fed to the space 34 between the pressure box and the plug 12, which urges the plug downwardly until the plug presses the material 4 down until it contacts the base of the mould as shown in Figure 4. In this position, the sheet material is urged by the rib 32 into the groove 30 where it is clamped securely in position. In this way, the material defining the wall 26 of the container is clamped securely in position so that when further moulding takes place on the material at the base of the plug, the material defining the wall 26 of the container cannot flow into the base 28 of the container 2.

Turning now to Figure 6, in this stage of the manufacture, a vacuum is applied through the vacuum pipe 16 to the interior of the plug 12 and the vacuum thus draws the material of the base of the container into the grooves 24 to form ribs 25 upstanding in the base of the container. As a consequence, the material of the base 28 of the container 2 is greatly thinned. In this way, the wall of the container remains a relatively thick and rigid material but the material of the ribs 25 in the base 28 of the container are relatively thin and flexible. In this way, the ribs form a cushion to protect, for example, soft fruit such as strawberries during storage and transportation without the necessity of having to insert a cushioning material such as a layer of foamed material, fabric, bubblewrap or the like in the base of the container. This has the great advantage that containers in accordance with the present disclosure are formed entirely of the one single PET material which greatly facilitates recycling of the container after use.

A further advantage is that the additional manufacturing steps currently used of supplying a layer of protective material in the base of the container and gluing it in position are eliminated, which lowers production cost. In an alternative embodiment, instead of using a vacuum to urge the material into engagement with the insert, air pressure could be alternatively or additionally applied to the underside of the material to urge the material up into the grooves in the insert. The temperature of the air pressure may be adjusted to ensure that the base of the container remains sufficiently flexible to ensure that the material is drawn or pressed completely into the grooves.

Turning now to Figure 7, the final stage of manufacturing the container is shown. The pressure box 10 is withdrawn, with the plug 14 and a quick blast of release air is applied to the underside of the mould through air supply openings 36 to release the container from the mould 6, from where it passes to a trimming station where the edge of the container walls are trimmed to a desired finished state. The temperature of the release air is low enough such that it does not affect or distort the shape of the moulded parts of the container.

In the described embodiment, the peripheral clamping surfaces between the plug and the mould comprise a rib on either the plug or the mould which it engages with a groove on the other of the plug or mould but other forms of clamping could be used such as a smooth clamping surface on each of the components which abut to form a complete seal between the two components. The material of the container clamped between the two clamping surfaces may be compressed or deflected to a sufficient extent to seal any minor leaks. In an alternative form, a gasket may be provided between the two clamping surfaces, the gasket being formed of a compatible recyclable material such as the material of the container. The gasket may be formed of an expanded or foamed form of the PET material from which the container is made.

The embodiment described provides a cushioning effect to products stored in the container but in alternative embodiments just one or two ribs could be provided in the base of the container to divide the container into a number of compartments for locating and protecting individual items such as mangoes from damaging each other during transit. In another form, the base of the container may be formed with at least one set of concentric ribs adapted to receive and locate in the container a larger fruit such as a peach. The concentric ribs may increase in height away from the axis of the concentric ribs to form a shaped shallow cup adapted to cushion and locate a larger fruit, for example.

In a further embodiment, the plug has a further clamping surface extending across the container from a first position on the peripheral clamping surface to a 2^{nd} position on the peripheral clamping surface spaced from the first position, the further clamping surface being adapted to engage a further clamping surface of the mould to clamp the material of the container therebetween to define a predetermined area of the base to define and secure the material of the predetermined area of the base separate from the remaining material of the container.

## Claims

1. A tool for thermoforming a container having a base (28) and an upstanding sidewall (26) or walls (26), the tool including a mould (6) having a profile shaped to form the exterior shape of the container, a plug (14) adapted to be inserted in the mould (6) to define the interior of the container, the plug (14) having a lower face (20) adapted to define the profile of the base (28) of the container, wherein the profile of the lower face (20) of the plug (14) has a plurality of grooves (24) adapted to form a plurality of ribs (25) upstanding in the interior of the base (28) of the container, wherein the lower face (20) of the plug (14) has a peripheral groove (30) or rib (32) extending around the periphery of the base (28) adjacent the sidewall (26) of the container, the peripheral groove (30) or rib (32) mating with a corresponding peripheral rib (32) or groove (30), as the case may be, on or in the mould (6) to securely clamp the material of the container between the mould (6) and the plug (14) so that the wall (26) of the container and the base (28) of the container can be subjected to different pressures.

2. A tool according to claim 1 wherein said plurality of grooves (24) are arranged in spaced parallel relationship.

3. A tool according to claim 1 or 2 wherein the profile of the lower face (20) of the plug (14) is formed on an insert (22) secured to the plug (14).

4. A tool according to claim 3 wherein the insert (22) is located in a recess in the lower face (20) of the plug (14).

5. A tool according to claim 3 or 4, wherein the insert (22) is securable to the plug (14) to enable the tool to be readily adapted to produce, selectively, a variety of containers having different base (28) profiles.

6. A tool according to any one of the preceding claims, wherein one or two ribs (25) are provided in the base (28) of the container to divide the container into a number of compartments for locating and protecting individual items from damaging each other during transit.

7. A tool according to any one of the preceding claims wherein the ribs (25) comprise at least one set of concentric ribs (25) adapted to receive and locate in the container a large fruit.

8. A tool according to claim 7, wherein the concentric ribs (25) increase in height away from the axis of the concentric ribs (25) to form a shaped shallow cup adapted to cushion and locate a fruit.

9. A method of manufacturing a container from a sheet of thermoplastic material including a mould (6) shaped to define the exterior profile of the container, placing a sheet of thermoplastic material over the mould (6), warming the sheet of thermoplastic material to a mouldable temperature, the container having a base (28) and an upstanding sidewall or walls (26), providing a plug (14) shaped to provide the internal profile of the container and being adapted to be inserted in the mould (6) to clamp the material to define the container therebetween, forming the lower face (20) of the plug (14) with a peripheral groove (30) or rib (32) extending around the periphery of the base (28) adjacent the sidewall (26) of the container, the peripheral groove (30) or rib (32) mating with a corresponding peripheral rib (32) or groove (30), as the case may be, on or in the plug (6) to securely clamp the material of the container between the mould (6) and the plug (14), so that the wall (26) of the container and the base (28) of the container can be subjected to different pressures, forming a lower face (20) of the plug (14) to define the profile of the base (28) of the container, forming a plurality of grooves (24) in the lower face (20) of the plug (14), applying a vacuum or pressurised air to the insert (22) to draw or press the sheet of material into the grooves (24) therein to form ribs (25) upstanding in the interior of the base (28) of the container.

10. A method according to claim 9, wherein one or two ribs (25) are provided in the base (28) of the container to divide the container into a number of compartments for locating and protecting individual items from damaging each other during transit.

11. A method according to claim 9 or 10, wherein the ribs (25) comprise at least one set of concentric ribs (25) adapted to receive and locate in the container a large fruit.

12. A method according to claim 11, wherein the concentric ribs (25) increase in height away from the axis of the concentric ribs (25) to form a shaped shallow cup adapted to cushion and locate a fruit.

## Patentansprüche

1. Ein Werkzeug zur Thermoformung eines Behälters mit einem Boden (28) und einer aufrechten Seitenwand (26) oder aufrechten Seitenwänden (26), wobei das Werkzeug eine Form (6) mit einem Profil umfasst, dessen Gestalt die äußere Form des Behälters bestimmt, sowie einen Einsatzkörper (14), der darauf ausgelegt ist, in die Form (6) eingesetzt zu werden, um das Innere des Behälters zu definieren, und wobei der Einsatzkörper (14) eine Unterseite (20) hat, die darauf ausgelegt ist, das Profil des Bodens (28) des Behälters zu definieren, und wobei das Profil der Unterseite (20) des Einsatzkörpers (14) eine Anzahl von Rillen (24) hat, die darauf ausgelegt sind, eine Anzahl von Rippen (25) zu bilden, die aufrecht im Inneren des Bodens (28) des Behälters stehen, und wobei die Unterseite (20) des Einsatzkörpers (14) eine umfängliche Rille (30) oder Rippe (32) hat, die entlang des Umfangs des Bodens (28) neben der Seitenwand (26) des Behälters verläuft, und wobei die umfängliche Rille (30) oder Rippe (32) mit einer entsprechenden umfänglichen Rippe (32) bzw. Rille (30) an bzw. in der Form (6) zusammenwirkt, um das Material des Behälters sicher zwischen der Form (6) und dem Einsatzkörper (14) festzuklemmen, so dass die Wand (26) des Behälters und der Boden (28) des Behälters unterschiedlichen Drücken ausgesetzt werden können.

2. Ein Werkzeug nach Anspruch 1, wobei die Anzahl von Rillen (24) räumlich parallel zueinander angeordnet sind.

3. Ein Werkzeug nach Anspruch 1 oder 2, wobei das Profil der Unterseite (20) des Einsatzkörpers (14) an einem am Einsatzkörper (14) befestigten Einsatz (22) ausgebildet ist.

4. Ein Werkzeug nach Anspruch 3, wobei der Einsatz (22) in einer Vertiefung an der Unterseite (20) des Einsatzkörpers (14) sitzt.

5. Ein Werkzeug nach Anspruch 3 oder 4, wobei der Einsatz (22) am Einsatzkörper (14) befestigt werden kann, damit das Werkzeug einfach so angepasst werden kann, dass damit selektiv verschiedene Behälter mit unterschiedlichem Boden(8)profil hergestellt werden können.

6. Ein Werkzeug nach einem der vorstehenden Ansprüche, wobei im Boden (28) des Behälters eine oder zwei Rippen (25) vorgesehen sind, die den Behälter in eine Reihe von Abteilungen unterteilen, so dass separate Objekte darin untergebracht werden können und während des Transports vor gegenseitiger Beschädigung geschützt sind.

7. Ein Werkzeug nach einem der vorstehenden Ansprüche, wobei die Rippen (25) mindestens einen Satz konzentrische Rippen (25) umfassen, die darauf ausgelegt sind, eine große Frucht in dem Behälter aufzunehmen und zu fixieren.

8. Ein Werkzeug nach Anspruch 7, wobei die Höhe der konzentrischen Rippen (25) von der Achse der konzentrischen Rippen (25) weg zunimmt, so dass sie einen flachen Becher bilden, der darauf ausgelegt ist, eine Frucht zu polstern und zu fixieren.

9. Ein Verfahren zur Herstellung eines Behälters aus einem Bogen thermoplastischen Materials, umfassend eine Form (6), deren Gestalt das äußere Profil des Behälters bestimmt, das Legen eines Bogens des thermoplastischen Materials über die Form (6), das Erhitzen des Bogens des thermoplastischen Materials auf eine formbare Temperatur, wobei der Behälter einen Boden (28) und eine aufrechte Seitenwand oder aufrechte Seitenwände (26) hat, die Bereitstellung eines Einsatzkörpers (14), der so geformt ist, dass er das Innenprofil des Behälters bildet, und der darauf ausgelegt ist, in die Form (6) eingesetzt zu werden, um das Material festzuklemmen und den dazwischenliegenden Behälter zu definieren, das Ausbilden der Unterseite (20) des Einsatzkörpers (14) mit einer umfänglichen Rille (30) oder Rippe (32), die entlang des Umfangs des Bodens (28) neben der Seitenwand (26) des Behälters verläuft, wobei die umfängliche Rille (30) oder Rippe (32) mit einer entsprechenden umfänglichen Rippe (32) bzw. Rille (30) an bzw. in dem Einsatzkörper (6) zusammenwirkt, um das Material des Behälters sicher zwischen der Form (6) und dem Einsatzkörper (14) festzuklemmen, so dass die Wand (26) des Behälters und der Boden (28) des Behälters unterschiedlichen Drücken ausgesetzt werden können, das Ausbilden einer Unterseite (20) des Einsatzkörpers (14), die das Profil des Bodens (28) des Behälters definiert, das Ausbilden einer Anzahl von Rillen (24) an der Unterseite (20) des Einsatzkörpers (14), das Anlegen eines Vakuums oder von Druckluft an den Einsatz (22), um den Bogens des Materials in die Rillen (24) zu ziehen oder zu drücken, so dass aufrecht im Inneren des Bodens (28) des Behälters stehende Rippen (25) gebildet werden.

10. Ein Verfahren nach Anspruch 9, wobei im Boden (28) des Behälters eine oder zwei Rippen (25) vorgesehen sind, die den Behälter in eine Reihe von Abteilungen unterteilen, so dass separate Objekte darin untergebracht werden können und während des Transports vor gegenseitiger Beschädigung geschützt sind.

11. Ein Verfahren nach Anspruch 9 oder 10, wobei die Rippen (25) mindestens einen Satz konzentrische Rippen (25) umfassen, die darauf ausgelegt sind, eine große Frucht in dem Behälter aufzunehmen und zu fixieren.

12. Ein Verfahren nach Anspruch 11, wobei die die Höhe der konzentrischen Rippen (25) von der Achse der konzentrischen Rippen (25) weg zunimmt, so dass sie einen flachen Becher bilden, der darauf ausgelegt ist, eine Frucht zu polstern und zu fixieren.

## Revendications

1. Outil pour thermoformer un récipient ayant une base (28) et une paroi latérale verticale (26) ou des parois (26), l'outil incluant un moule (6) ayant un profil formé pour former la forme extérieure du récipient, un poinçon (14) adapté à être inséré dans le moule (6) pour définir l'intérieur du récipient, le poinçon (14) ayant une face inférieure (20) adaptée à définir le profil de la base (28) du récipient, dans lequel le profil de la face inférieure (20) du poinçon (14) a une pluralité de rainures (24) adaptées à former une pluralité de nervures (25) verticales dans l'intérieur de la base (28) du récipient, dans lequel la face inférieure (20) du poinçon (14) a une rainure (30) ou nervure (32) périphérique s'étendant autour de la périphérie de la base (28) adjacente à la paroi latérale (26) du récipient, la rainure (30) ou nervure (32) périphérique se conjuguant à une nervure (32) ou rainure (30) périphérique correspondante, selon le cas, sur ou dans le moule (6) pour serrer de manière sécurisée le matériau du récipient entre le moule (6) et le poinçon (14) de sorte que la paroi (26) du récipient et la base (28) du récipient peuvent être soumises à différentes pressions.

2. Outil selon la revendication 1, dans lequel ladite pluralité de rainures (24) sont agencées dans une relation parallèle espacée.

3. Outil selon la revendication 1 ou 2, dans lequel le profil de la face inférieure (20) du poinçon (14) est formé sur un insert (22) sécurisé au poinçon (14).

4. Outil selon la revendication 3, dans lequel l'insert (22) est situé dans un retrait dans la face inférieure (20) du poinçon (14).

5. Outil selon la revendication 3 ou 4, dans lequel l'insert (22) peut être sécurisé au poinçon (14) pour permettre à l'outil d'être facilement adapté à produire, sélectivement, une variété de récipients ayant différents profils de base (28).

6. Outil selon l'une quelconque des revendications précédentes, dans lequel une ou deux nervures (25) sont prévues dans la base (28) du récipient pour diviser le récipient en un certain nombre de compartiments pour positionner et protéger des articles individuels de s'endommager l'un l'autre au cours du transit.

7. Outil selon l'une quelconque des revendications précédentes, dans lequel les nervures (25) comprennent au moins un ensemble de nervures concentriques (25) adaptées à recevoir et positionner dans le récipient un grand fruit.

8. Outil selon la revendication 7, dans lequel les nervures concentriques (25) augmentent en hauteur à l'écart de l'axe des nervures concentriques (25) pour former une coupelle peu profonde formée adaptée à amortir et positionner un fruit.

9. Procédé de fabrication d'un récipient à partir d'une feuille de matériau thermoplastique incluant un moule (6) formé pour définir le profil extérieur du récipient, placer une feuille de matériau thermoplastique sur le moule (6), chauffer la feuille de matériau thermoplastique à une température pouvant être moulée, le récipient ayant une base (28) et une paroi latérale verticale ou des parois (26), fournir un poinçon (14) formé pour fournir le profil interne du récipient et étant adapté à être inséré dans le moule (6) pour serrer le matériau pour définir le récipient entre eux, former la face inférieure (20) du poinçon (14) avec une rainure (30) ou nervure (32) périphérique s'étendant autour de la périphérie de la base (28) adjacente à la paroi latérale (26) du récipient, la rainure (30) ou nervure (32) périphérique se conjuguant à une nervure (32) ou rainure (30) périphérique correspondante, selon le cas, sur ou dans le poinçon (6) pour serrer de manière sécurisée le matériau du récipient entre le moule (6) et le poinçon (14) de sorte que la paroi (26) du récipient et la base (28) du récipient peuvent être soumises à différentes pressions, former une face inférieure (20) du poinçon (14) pour définir le profil de la base (28) du récipient, former une pluralité de rainures (24) dans la face inférieure (20) du poinçon (14), appliquer un vide ou de l'air pressurisé à l'insert (22) pour attirer ou presser la feuille de matériau dans les rainures (24) en son sein pour former des nervures (25) verticales dans l'intérieur de la base (28) du récipient.

10. Procédé selon la revendication 9, dans lequel une ou deux nervures (25) sont prévues dans la base (28) du récipient pour diviser le récipient en un certain nombre de compartiments pour positionner et protéger des articles individuels de s'endommager l'un l'autre au cours du transit.

11. Procédé selon la revendication 9 ou 10, dans lequel les nervures (25) comprennent au moins un ensemble de nervures concentriques (25) adaptées à recevoir et positionner dans le récipient un grand fruit.

12. Procédé selon la revendication 11, dans lequel les nervures concentriques (25) augmentent en hauteur à l'écart de l'axe des nervures concentriques (25) pour former une coupelle peu profonde formée adaptée à amortir et positionner un fruit.
